# EUROPÄISCHE PATENTSCHRIFT

(11) **EP 1 734 636 B1**
(45) Veröffentlichungstag und Bekanntmachung des Hinweises auf die Patenterteilung: **29.05.2013**
(21) Anmeldenummer: 06405260.8
(22) Anmeldetag: 16.06.2006
(51) Int. Cl.: H05B 37/02, H02J 13/00

(54) **Schaltdose**
Switchbox
Boîtier de commutation

(30) Priorität: 16.06.2005 CH 200501021
(43) Veröffentlichungstag der Anmeldung: 20.12.2006
(73) Patentinhaber: Adhoco AG, CH-8406 Winterthur (CH)
(72) Erfinder: Schumann, Thomas, CH-9043 Trogen (CH); Guillemin, Antoine, CH-1018 Lausanne (CH); Beer, Hermann, CH-9427 Wolfhalden (CH)
(74) Vertreter: Breiter, Heinz

(56) Entgegenhaltungen:
- WO-A1-03/073182
- DE-A1- 10 315 623
- DE-A1- 19 935 003
- US-A- 4 990 908

## Beschreibung

Die Erfindung bezieht sich auf eine Installation zur Betätigung von wenigstens einem elektrischen Verbraucher einer Heim- oder Gebäudetechnik, bestehend aus wenigstens je einer Leistungszuführung, einem elektrischen Verbraucher, einem Schaltkreis, einer Schaltdose, einem Bedienelement und einer Heim- oder Gebäudeautomationssteuerung. Weiter betrifft die Erfindung ein Verfahren zum Betrieb der Installation.

Für das Ein- und Ausschalten der elektrischen Verbraucher in Gebäuden sind zahlreiche Ausführungsformen der Verkabelung und der Bedienung auf dem Markt. Üblicherweise werden an einem oder mehreren gut zugänglichen Orten Bedienelemente wie beispielsweise Kippschalter, Ein-/Aus-Druckschalter oder monostabile Taster montiert, die mit einer geeigneten Verkabelung dafür sorgen, dass Stromkreise geöffnet und geschlossen werden können, z.B. zum Ein- und Ausschalten einer Beleuchtung. Zur Vereinfachung und Systematisierung werden zweckmässig in Deckennähe Abzweig- oder Unterputzdosen angebracht. Von den Bedienelementen zu den Abzweig- oder Unterputzdosen und von den Abzweig- oder Unterputzdosen zu den elektrischen Verbrauchern führen in der Regel Stichleitungen. Diese Installationstechnik ist bewährt, bedingt aber einen recht grossen Verkabelungsaufwand.

Sollen diese elektrischen Verbraucher im Zusammenhang mit einer Gebäudeautomation automatisch angesteuert werden, werden nach dem Stand der Technik ein einzelner Taster und die Leistungszuführung an die Verbraucher mit einem zweiten, separat geführten Kabel einer einheitlichen Gebäudekommunikation zugeführt. Diese Lösung mit einem Gebäudebus zeichnet sich durch eine einheitliche, oftmals auch stockwerkübergreifende Konzeption aus und wird in verschiedenen Ausführungsformen angeboten (z.B. EIB/Konnex, LON). Die einzelnen Knoten (Schalter, Sensoren usw.) enthalten eine gewisse eigene, dezentrale Intelligenz, was zu einer auch für komplexe Anlagen hohen Ausfallsicherheit führt. Auch wegen der zusätzlichen Verkabelung und des Parametrierungs- und Programmieraufwandes hat sich diese Lösung aber nur für Zweckgebäude und bei Wohnneubauten im hohen Preissegment durchgesetzt.

Alternativ wurden in den letzten Jahren, nicht zuletzt zur Senkung des Installationsaufwands, verschiedene funkbasierte Lösungen angeboten. Hierzu werden die bestehenden Taster durch Funktaster ersetzt, die in unterschiedlichen Ausführungsformen erhältlich sind:
- In einer ersten Ausführungsform meldet ein Funktaster, statt einen Stromkreis direkt zu schliessen, mit einem Funksender eine Information an einen Funkempfänger, der seinerseits den Stromkreis schliesst. Hierzu muss die bestehende Verkabelung abgeändert und ein zusätzlicher Funkempfänger in einen umgebauten Stromkreis integriert werden. Da dem Funksender in dieser Ausführungsform keine elektrische Speisung zur Verfügung steht, werden batteriegespiesene oder autarke Funksender angeboten (z.B. ein Schaltergehäuse von Enocean, Gebrauchsmusterschrift DE 202004005837 U).
- In einer anderen Ausführungsform wird ein Funktaster eingebaut, bei dem die Tasterfunktion zum Schliessen des Stromkreises erhalten bleibt. Zusätzlich wird eine Funkmitteilung an eine Hauszentrale oder an einen Hauptschalter gesendet, damit diese den Status des Energieverbrauchers kennt (z.B. Produktlinie "GAMMAWAVE" von Siemens). In einer Untervariante kann über die Hauszentrale per Funkmitteilung an den Funktaster der Stromkreis auch zentral geschlossen werden, z.B. mittels einer Präsenzsimulation bei Abwesenheit der Bewohner. Auch diese Bauform hat bei blossem Ersatz des konventionellen Tasters in der Regel keine elektrische Speisung zur Verfügung und macht deshalb eine zusätzliche Verkabelung erforderlich.
- In einer dritten Ausführungsform werden die Taster komplett entfernt und durch eine Funk- oder Infrarot-Fernbedienung ersetzt. Mit dieser mobilen Sendeeinheit werden die Schaltbefehle direkt an den Funkempfänger gesendet, der die elektrische Leistung schaltet. Auch hier muss die bestehende Verkabelung abgeändert und ein zusätzlicher Funkempfänger in den umgebauten Stromkreis integriert werden. Beim Gebrauch solcher Systeme wird regelmässig bemängelt, dass die mobile Funkfernbedienung oft nicht dort liegt, wo sie gerade gebraucht wird.

Trotz grosser Anstrengungen und punktueller Fortschritte ist Heimautomationssystemen im Privathaus der breite Durchbruch noch nicht gelungen. Komplizierte Elektroinstallationen, insbesondere für die Sensoren, damit verbunden hohe Kosten sowie der Zwang zur Änderung der gewohnten Verwendung und Anordnung der Taster stehen einem Einsatz von Heim- oder Gebäudeautomationssystemen auf breiter Basis immer noch entgegen. Ein Beispiel eines zwar vielseitigen aber komplexen Systems ist aus WO 03/073182 A1 (General Electric) bekannt.

Für die reine Datenübertragung sind Systeme bekannt, welche das bestehende Stromversorgungsnetz nutzen (DE 199 35 003 A1, OSRAM Opto Semiconductors GmbH). Schaltvorgänge werden mit solchen Systemen aber nicht durchgeführt. Für Einzelanwendungen wie z.B. das Steuern eines Peckenventilators sind Steuerungen bekannt, bei welchen die Fernbedienung an der bereits vorhandenen Verkabelung angeschlossen ist, welche Strom vom Ort des Wandschalters zur Deckenbefestigung (an welcher der Deckenventilator mit Licht befestigt ist) leitet In der Fernbedienung stutzt eine Steuerlogikschaltung in Abhängigkeit der Betätigung von Schaltern der Fernbedienung die Wellenform des einfallenden Wechselstromkreises indem sie eine oder mehrere positive Halbzyklen eliminiert und auf diese Weise ein unverwechselbares Signal generiert, welches dem spezifischen Zustand der Schalter der Fernbedienung entspricht (US 4 990 908 A1, Tung Michael). DE 10315623 offenbart eine weitere Installation zur Steuerung eines elektrischen Verbrauchers im Abgang einer Niederspannungsanlage.

Der Erfindung liegt die Aufgabe zugrunde, Installationen für das Schalten elektrischer Verbraucher mit möglichst geringem Installationsaufwand in eine funk- und/oder infrarotbasierte Heim- oder Gebäudeautomationslösung zu integrieren und zu betreiben.

Die Aufgabe wird bezüglich der Installation erfindungsgemäss dadurch gelöst, dass die Schaltdose wenigstens je ein Schaltelement, ein sowohl Schaltbefehle entgegennehmendes und/oder Schaltzustände weitermeldendes bidirektionales Kommunikationsmodul, einen Mikrocontroller sowie Verdrahtungsanschlüsse für einen oder mehrere Verbraucher (12, 12') umfasst, die Schaltdose über vorhandene, elektrische Leiter an das Netz angeschlossen ist, und ein oder mehrere Bedienelemente mit der Schaltdose kommunizieren. Spezielle und weiterbildende Ausführungsformen sind Gegenstand von abhängigen Patentansprüchen.

Der Mikrocontroller wertet hierbei die Signale des/der Bedienelements/e und/oder des/der Kommunikationsmoduls/e aus und kann über Messungen des Strom- und Spannungsverlaufs der Verbraucher auf deren Ist-Zustand schliessen. Auf dieser Basis kann der Mikrocontroller Schaltbefehle an die Schaltelemente erteilen und/oder dem Kommunikationsmodul Meldungen zur Weitergabe an die Heim- oder Gebäudeautomationssteuerung, welche die Soll- und Ist-Zustände koordiniert, übergeben.

Gemäss der Erfindung ist die Schaltdose als einbaufertiges, kompaktes, elektrisches Bauteil ausgebildet und in oder anstelle einer in üblichen Installationen verbreitet eingesetzten Abzweig- oder Unterputzdose installierbar und damit von aussen nicht sichtbar.

Das bidirektionale Kommunikationsmodul der erfindungsgemässen Schaltdose nimmt dabei einen Schaltbefehl auf zwei Arten entgegen, die sich gegenseitig ergänzen:
- Einerseits über wenigstens einen vorhandenen Taster und über eine vorhandene Verkabelung leitergebunden, mit dem wesentlichen Vorteil, dass diese Installationskomponenten weiter wie üblich genutzt werden können und abgesehen von gesparten Umbaukosten vom Gebäudenutzer keine Umstellung der Verwendungsgewohnheiten abverlangt.
- Andererseits über Signale, insbesondere Funk- und/oder Infrarotsignale, die von einem mobilen oder fest installierten Befehlsgeber und/oder einer Heim- oder Gebäudeautomationssteuerung ausgesendet werden, wobei die Heim- oder Gebäudeautomationssteuerung eine datenverarbeitende und/oder -speichernde Funktion erfüllt und nicht ausschliesslich auf die Gebäudeautomation beschränkt sein muss.

Ein Schaltvorgang kann auf verschiedene Arten ausgelöst werden:
- Einerseits über wenigstens ein eingebautes Schaltelement, beispielsweise ein oder mehrere Relais, die beim Verbraucher wiederum über die bereits vorhandene Verkabelung leitergebunden eine Zustandsänderung auslösen, wobei mit Hilfe eines integrierten Mikrocontrollers Signale verschiedener Taster (zum Beispiel mono- und bistabile Kipp- oder Ein-/Austaster, Auf-/Ab-Taster) verarbeitet werden.
- Andererseits über einen proportionalen Spannungsausgang oder eine Phasenschnittsteuerung, die über einfache Ein-/Aus-Funktionen hinaus beispielsweise auch Dimmfunktionen ermöglichen.
- Drittens über ein in der Schaltdose integriertes, elektrische Leistung proportional steuerndes Element, das auch komplexere Verbraucher wie zum Beispiel induktive oder kapazitive Lasten direkt ansteuern kann.

Eine weitere vorteilhafte Installation ist dadurch gekennzeichnet, dass das Bedienelement stromlos ist, das heisst, nicht mit elektrischer Energie versorgt werden muss, da es lediglich die Aufgabe hat, einen Kontakt zu schliessen.

In Bezug auf das Verfahren wird die Aufgabe erfindungsgemäss dadurch gelöst, dass ein erteilter Schaltbefehl über vorhandene elektrische Installationsleiter an wenigstens einem elektrischen Verbraucher einen Schaltvorgang auslöst und das bidirektionale Kommunikationsmodul den neuen Schaltzustand an die Heim- oder Gebäudeautomationssteuerung zum Datenabgleich meldet.

Hat sich der Zustand wenigstens eines elektrischen Verbrauchers geändert, sendet das bidirektionale Kommunikationsmodul Daten, die den aktuellen Zustand beschreiben, an die Heim- oder Gebäudeautomationssteuerung, so dass diese einen Datenabgleich vornehmen und den neuen Schaltzustand vermerken kann. Dieser Vorgang ist insbesondere dann von Bedeutung, wenn ein Schaltbefehl von einem Taster leitergebunden oder von einem Befehlsgeber, der nicht die Heim- oder Gebäudeautomationssteuerung ist, per Signal ausgesendet wurde.

Andererseits wird in einer weiteren, vorteilhaften Ausführungsform eine aktuelle Zustandserfassung durch ein sogenanntes "Polling" sichergestellt. D.h. das Kommunikationsmodul versendet in periodischen Intervallen Signale über den aktuellen Zustand eines oder mehrerer Verbraucher an die Heim- oder Gebäudeautomationssteuerung, die ihrerseits Zustandsänderungen über einen Datenabgleich erfasst und verarbeitet.

Eine weitere, vorteilhafte Ausführungsform mit einem dezentral organisierten Kommunikationsverkehr nutzt den Polling-Mechanismus, indem das Kommunikationsmodul die in periodischen Intervallen versendeten Signale zwecks Daten- bzw. Zustandsabgleich nicht an die Heim- oder Gebäudeautomationssteuerung, sondern an die übrigen Kommunikationsteilnehmer sendet.

Mit der erfindungsgemässen Anordnung ist auch bei einem allfälligen Ausfall der Funk- oder Infrarotverbindung und/oder der Heim- oder Gebäudeautomationssteuerung das Bedienen der Verbraucher sichergestellt, da diese immer auch leiterbasiert, d.h. und funk- bzw. infrarotunabhängig, funktionieren. Nach einem solchen Ausfall stellt eine Systeminitialisierung oder der wieder in Gang gekommene Polling-Mechanismus das Erfassen des aktuellen Systemzustands sicher. Somit ist eine hohe Systemsicherheit und Fehlertoleranz gewährleistet.

Weiterhin erlaubt die erfindungsgemässe Anordnung, ein Gebäude oder Teile eines Gebäudes schrittweise umzurüsten.

Die erfindungsgemässe Installation bezieht die erforderliche Betriebsenergie über vorhandene elektrische Leiter direkt vom Netz. Damit entfällt die Notwendigkeit einer Ergänzung der bestehenden Verkabelung bzw. der Austausch von nicht automatisch wiederaufladbaren Batterien, welche als Alternativen bekannt sind.

Als Funkkommunikation kommt grundsätzlich jede bidirektionale Technologie in Frage, die in der Lage ist, die Steuerungsinformation fehlerfrei, fälschungssicher, vertraulich und in Quasi-Echtzeit zwischen Schaltdose und Heim- oder Gebäudeautomationssteuerung und/oder auch zwischen zwei oder mehreren Schaltdosen zu übermitteln. Dies kann ein global verwendeter Standard, z.B. "Bluetooth" oder "Zigbee", oder eine proprietäre Lösung sein.

Im Rahmen der Erfindung liegt ferner eine Schaltdose mit einer Schaltungsanordnung für eine Installation nach Anspruch 1 zur Betätigung von wenigstens einem elektrischen Verbraucher in einer gebäudetechnischen Anordnung. Die Schaltungsanordnung umfasst hierbei ein Schaltelement, ein Kommunikationsmodul, welches zum Entgegennehmen von Schaltbefehlen und/oder zum Weitermelden von Schaltzuständen ausgebildet ist, eine Steuerung, insbesondere einen Mikrocontroller, welche/welcher das Schaltelement steuert und mit dem Kommunikationsmodul in Verbindung steht, und mindestens einen Verdrahtungsanschluss für mindestens einen Verbraucher. In einer vorteilhaften Ausführungsform ist die Schaltdose in der genannten Schaltungsanordnung integriert.

Wichtige Vorteile der erfindungsgemässen Lösung sind beispielsweise:
- Es entfallen spezielle, bisher notwendige Änderungen der elektrischen Installationen und damit auch erhebliche Kosten.
- Bediengeräte wie Kippschalter und/oder Ein-/Aus-Taster, z.B. für elektrisches Licht, Dimmschalter, z.B. als drehbare Knöpfe ausgestaltet, Schalter für Heizungen, Klimaanlagen und Ventilatoren, Befehlsgeber für Rollläden, Jalousien und Markisen, mechanische Fenster, Türen und Tore und/oder Taster für Türglocken und Sonnerien können als Bedienelemente in der erfindungsgemässen Installation weiter wie gewohnt verwendet werden.
- In konventionellen Installationen verwendete Minuterie-Schaltungen, zum Beispiel Zeitschaltungen in Treppenhäusern, können ersatzlos weggelassen werden, indem die Zeitschaltfunktion entweder vom Mikrocontroller in der Schaltdose direkt oder von der Heim- oder Gebäudeautomationssteuerung über Funk- und/oder Infrarotbefehl indirekt wahrgenommen wird.

Die Kombination der aufgeführten Vorteile erhöht die Akzeptanz des Systems und erleichtert einen allfälligen Umbauentscheid wesentlich.

Die Erfindung wird nachfolgend anhand von in Zeichnungen dargestellten Ausführungsbeispielen näher erläutert, welche auch Gegenstand von abhängigen Ansprüchen sind. Es zeigen schematisch:
- Fig. 1 eine konventionelle Installation mit einem leitergebundenen Bedienelement zur Ansteuerung eines elektrischen Verbrauchers,
- Fig. 2 eine Fig. 1 entsprechende Ausführungsform der Erfindung,
- Fig. 3, 4 Varianten mit mehreren leitergebundenen Bedienelementen,
- Fig. 5 eine Installation mit mehreren leitergebundenen Bedienelementen und Zeitschaltern,
- Fig. 6 eine Installation mit einem Dimmer, und
- Fig. 7 eine Installation mit zwei Rollladenmotoren.

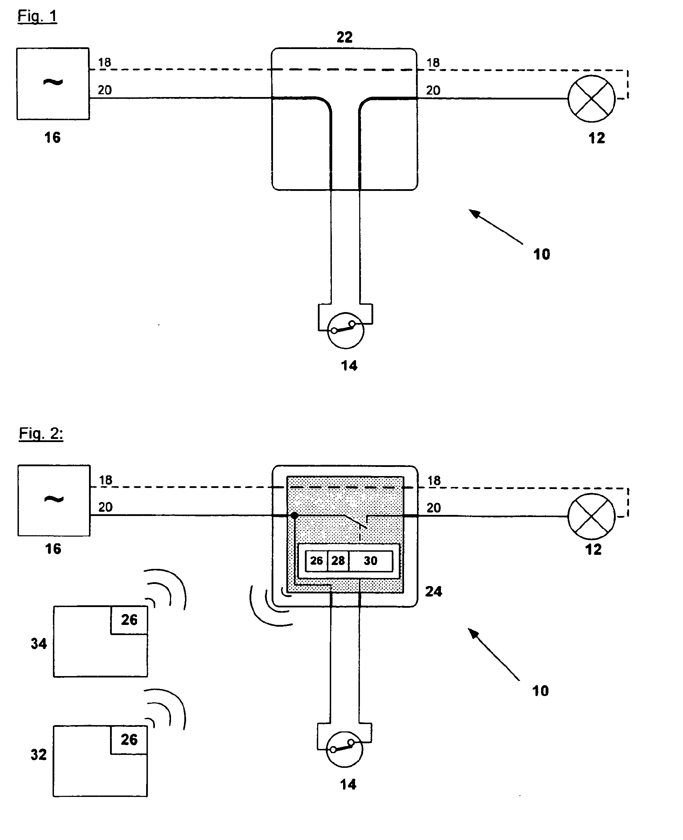

In **Fig. 1** wird eine bekannte elektrische Installation 10 mit einem elektrischen Verbraucher 12, vorliegend ein Beleuchtungskörper, mittels Bedienelement 14 ein- und ausgeschaltet und vom elektrischen Netz 16 gespeist. Aus Sicherheitsgründen wird hierbei ein Nullleiter 18 direkt, und ein Phasenleiter 20 über das Bedienelement 14 geführt. Zur Vereinfachung einer sicheren, nicht sichtbaren Verkabelung, wird in der Praxis üblicherweise eine Abzweigdose 22 verwendet.

**Fig. 2** zeigt eine erfindungsgemässe Installation 10 mit einer Schaltdose 24, die anstelle einer Abzweigdose 22 installiert ist. Die Schaltdose 24 umfasst ein Funk-Kommunikationsmodul, kurz Funkmodul 26, einen Mikrocontroller 28 mit entsprechender Software sowie ein Schaltelement 30, das den Stromkreis 16, 18, 20 mit dem elektrischen Verbraucher 12 schliessen kann. Die Schaltdose 24 kann von einer Heim- oder Gebäudeautomationssteuerung 32, die ebenfalls mit einem Funkmodul 26 ausgerüstet ist, Befehle zum Schliessen des Stromkreises 16, 18, 20 erhalten und über das Schaltelement 30 ausführen. Gleichzeitig kann die Schaltdose 24 die Schaltbewegungen des Bedienelements 14 mit dem Mikrocontroller 28 erfassen, über das Schaltelement 30 ausführen und über das Funkmodul 26 der Heim- oder Gebäudeautomationssteuerung 32 mitteilen.

Anstatt mit Hilfe des Bedienelements 14 kann der Bewohner auch mit Hilfe einer Fernbedienung 34 den Stromkreis 16, 18, 20 für den elektrischen Verbraucher 12 schliessen. Dabei teilt die Fernbedienung 34 mittels des darin enthaltenen Funkmoduls 26 der Heim- oder Gebäudeautomationssteuerung 32 den entsprechenden Wunsch des Bewohners mit. Die Heim- oder Gebäudeautomationssteuerung 32 übermittelt den Befehl dann wie zuvor beschrieben der Schaltdose 24.

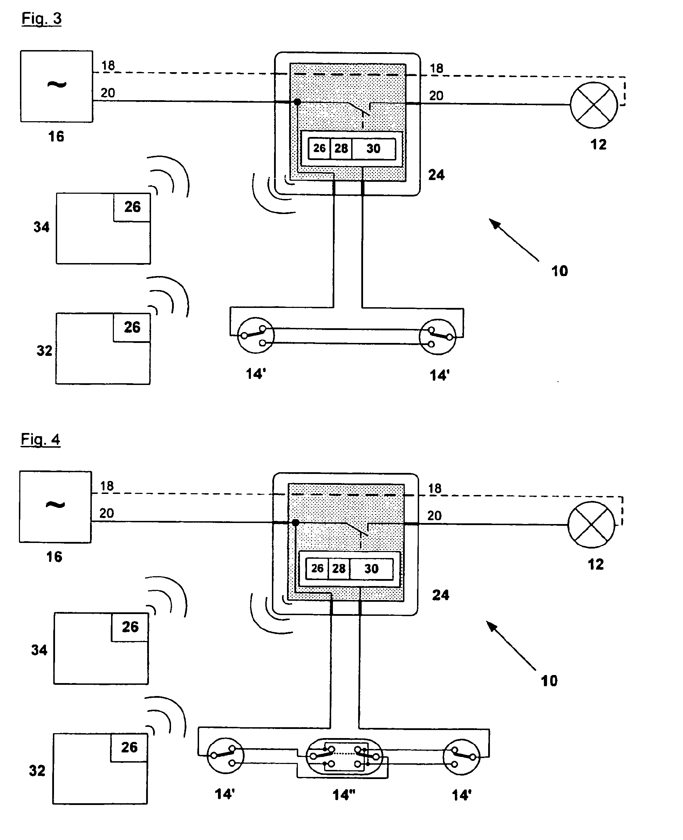

**Fig. 3** zeigt eine Installation 10, wie sie bei Räumen mit zwei oder mehr Türen auftritt: Hier wird üblicherweise in der Nähe jeder Türe je ein Bedienelement 14' installiert. Auch in diesem Fall kommt die Schaltdose 24 zum Einsatz, indem sie wie in Fig. 2 beschrieben anstelle einer einfachen Abzweigdose 22 genutzt wird.

Bei grösseren Benutzerzonen werden üblicherweise Installationen 10 wie in **Fig. 4** dargestellt mit Bedienelementen 14" verwendet, die mehr als zwei Einzelschalter umfassen. Solche Bedienelemente 14" können wie in der Zeichnung dargestellt auch in Kombination mit Bedienelementen 14' und/oder mit nicht dargestellten Bedienelementen 14 genutzt werden. Auch in diesen Fällen kommt die Schaltdose 24 gemäss Fig. 2 und 3 zum Einsatz.

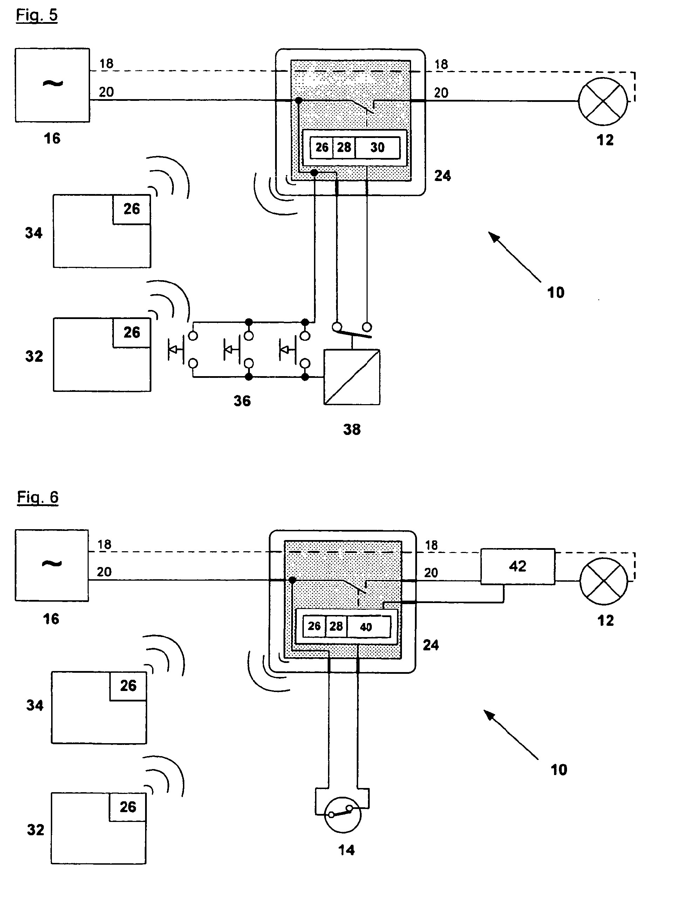

**Fig. 5** zeigt eine Installation 10, in der anstelle von Bedienelementen 14, 14', 14" monostabile Taster 36 in Kombination mit einer sogenannte Minuterie (Zeitschalter) 38 zum Einsatz kommt. In einer weiteren, nicht dargestellten Installation 10 wird eine Minuterie 38 ausser Betrieb genommen, wobei die Funktionalität dann von der Heim- oder Gebäudeautomationssteuerung 32 übernommen wird. In beiden Fällen kommt die verwendete Schaltdose 24 gemäss Fig. 2 - 4 zum Einsatz.

Gemäss **Fig. 6** kommt in einer Installation 10 mit einer Schaltdose 24 anstelle eines Schaltelements 30 auch eine Dimmeransteuerung 40 zum Einsatz. Diese steuert ein übliches Dimmerelement 42 an, vorliegend über ein galvanisch getrenntes 0-10 Volt Spannungssignal.

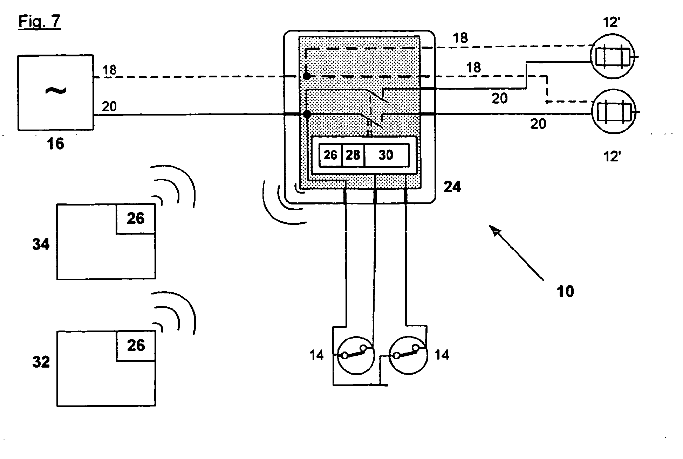

**Fig. 7** schliesslich zeigt eine Installation 10 mit zwei Verbrauchern 12 beziehungsweise mit zwei Rollladenmotoren 12', welche auch als Sonnenstorenmotoren genutzt werden können. Der Übersichtlichkeit wegen wurden keine weiteren Verbraucher 12, 12' eingezeichnet, es sind deren beliebig viele mit unterschiedlichen Funktionen, in der Regel abhängig von den bereits vorhandenen Installationen. Die Steuerung der verschiedenen Verbraucher 12, 12' erfolgt wiederum durch ein Schaltelement 30, das in diesem Fall mehrere Verbraucher 12, 12' schalten kann. Die Schaltdose 24 erhält die hierzu erforderlichen Schaltbefehle wie beschrieben über die Schalter 14, und/oder ebenso wie beschrieben funk- und/oder infrarotbasiert durch eine Fernbedienung 34, und/oder über die Heim- oder Gebäudeautomationssteuerung 32. Auch in dieser Variante koordiniert die Heim- oder Gebäudeautomationssteuerung 32 wiederum Soll- und Ist-Zustände der Verbraucher 12, 12' und nimmt die Funktion einer Steuerungszentrale wahr.

## Patentansprüche

1. Installation (10) zur Betätigung von wenigstens einem elektrischen Verbraucher (12, 12') einer Heim- oder Gebäudetechnik, bestehend aus wenigstens je
a) einer Lefstungszuführung (16),
b) einem elektrischen Verbraucher (12,12'),
c) einem Schaltkreis (12/12', 14/14'/14", 16),
d) einer einbaufertigen und kompakten Schaltdose (24) in oder anstelle einer in üblichen Installationen eingesetzten Abzweig- oder Unterputzdose,
e) einem Bedienelement (14, 14', 14") und
f) einer die Funktion einer Steuerungszentrale wahrnehmende Heim- oder Gebäudeautomationssteuerung (32),
wobei
g) die Schaltdose (24) wenigstens je ein Schaltelement (30), ein sowohl Schaltbefehle entgegennehmendes und/oder Schaltzustande weitermeldendes bidirektionales Kommunikationsmodul (26), einen Mikrocontroller (28) sowie Verdrahtungsanschlüsse für einen oder mehrere Verbraucher (12, 12') umfasst,
h) die Schaltdose (24) über vorhandene, elektrische Leiter (18, 20) an das Netz (16) angeschlossen ist, und
i) ein oder mehrere Bedienelemente (14, 14', 14") mit der Schaltdose (24) kommunizieren.

2. Installation (10) nach Anspruch 1, **dadurch gekennzeichnet, dass** das bidirektionale Kommunikationsmodul (26) funkbasiert, infrarotbasiert und/oder leitergebunden ausgestaltet ist.

3. Installation (10) nach einem der Ansprüche 1 bis 2, **dadurch gekennzeichnet, dass** das Schaltelement (30) wenigstens je ein Relais und/oder eine Dimmeransteuerung (40), vorzugsweise als proportionaler Spannungsausgang oder als Phasenschnittsteuerung ausgestaltet, aufweist und/oder ein eine elektrische Leistung proportional steuerndes Element umfasst.

4. Installation (1 0) nach einem der Ansprüche 1 bis 3, **dadurch gekennzeichnet, dass** das Bedienelement (14, 14', 14") stromlos ist.

5. Verfahren zum Betrieb der installation (10) nach einem der Ansprüche 1 bis 4, **dadurch gekennzeichnete dass** ein erteilter Schaltbefehl über vorhandene elektrische Installationsleiter (18, 20) an wenigstens einem elektrischen Verbraucher (12, 12') einen Schaltvorgang auslöst und das bidirektionale Kommunikationsmodul (26) den neuen Schaltzustand an die Heim- oder Gebäudeautomationssteuerung (32) zum Datenabgleich meldet.

6. Verfahren nach Anspruch 5, **dadurch gekennzeichnet, dass** die Heim- oder Gebäudeautomationssteuerung (32) einen Schaltbefehl auslöst und mit oder ohne Rückmeldung des bidirektionalen Kommunikationsmoduls (26) einen neuen Schaltzustand vermerkt.

7. Verfahren nach Anspruch 5 oder 6, **dadurch gekennzeichnet, dass** eine Dimmfunktion über eine Dimmerensteuerung (40), vorzugsweise einen proportionalen Spannungsausgang, eine Phasenschnittsteuerung und/oder über ein eine elektrische Leistung proportional steuerndes Element erfolgt.

8. Verfahren nach einem der Ansprüche 5 bis 7, **dadurch gekennzeichnet, dass** die Kommunikation zwischen Bedienelemente (14, 14', 14") und Schaltdose (24) leitergebunden, funk- und/oder infrarotbasiert erfolgt.

9. Verfahren nach einem der Ansprüche 5 bis 8, **dadurch gekennzeichnet, dass** die Funk- oder Infrarotkommunikation durch globale Standards oder durch proprietäre Lösungen erfolgt.

10. Schaltdose (24) mit einer Schaltungsanordnung für eine Installation (10) nach Anspruch 1 zur Betätigung von wenigstens einem elektrischen Verbraucher (12, 12') in einer gebäudetechnischen Anordnung, wobei die Schaltungsanordnung
a) ein Schaltelement (30),
b) ein Kommunikationsmodul (26), welches zum Entgegennehmen von Schaltbefehlen und/oder zum Weitermelden von Schaltzuständen ausgebildet ist,
c) eine Steuerung, insbesondere einen Mikrocontroller (28), welche/welcher das Schaltelement (30) steuert und mit dem Kommunikationsmodul (26) in Verbindung steht, und
d) mindestens einen Verdrahtungsanschluss für mindestens einen Verbraucher (12, 12') umfasst.

## Claims

1. Installation (10) for operating at least one electrical load (12, 12') of home or building technology, consisting of at least
a) a power supply (16),
b) an electrical load (12, 12'),
c) a circuit (12/12', 14/14'/14'', 16),
d) a ready for installation and compact connection box (24) in or instead of a junction box or flush-mounted box as used in conventional installations,
e) an operating element (14, 14', 14''), and
f) a home or building automation controller (32) which performs the function of a control centre,
**characterized in that**,
g) the connection box (24) comprises each at least one switching element (30), a bidirectional communication module (26) which both receives switching commands and/or relays switching states, a microcontroller (28) and wiring connections for one or more loads (12, 12'),
h) the connection box (24) is connected to the grid (16) via existing electrical conductors (18, 20), and
i) one or more operating elements (14, 14', 14'') communicate with the connection box (24).

2. Installation (10) according to Claim 1, **characterized in that** the bidirectional communication module (26) is radio-based, infrared-based and/or conductor-based.

3. Installation (10) according to any one of Claims 1 to 2, **characterized in that** the switching element (30) has at least one relay and/or a dimmer control means (40), preferably in the form of a proportional voltage output or a phase-gating controller, and/or comprises an element which proportionally controls electrical power.

4. Installation (10) according to one of Claims 1 to 3, **characterized in that** the operating element (14, 14', 14'') is de-energized.

5. Method for operating the installation (10) according to one of Claims 1 to 4, **characterized in that** an issued switching command triggers a switching operation at at least one electrical load (12, 12') via existing electrical installation conductors (18, 20), and the bidirectional communication module (26) reports the new switching state to the home or building automation controller (32) for data matching.

6. Method according to Claim 5, **characterized in that** the home or building automation controller (32) triggers a switching command and notes a new switching state with or without feedback from the bidirectional communication module (26).

7. Method according to Claim 5 or 6, **characterized in that** a dimming function is carried out using a dimmer control means (40), preferably a proportional voltage output, a phase-gating controller and/or an element which proportionally controls electrical power.

8. Method according to one of Claims 5 to 7, **characterized in that** communication between operating elements (14, 14', 14'') and the connection box (24) is carried out in a conductor-based, radio-based and/or infrared-based manner.

9. Method according to one of Claims 5 to 8, **characterized in that** the radio or infrared communication is carried out by means of global standards or by means of proprietary solutions.

10. Connection box (24) having a circuit arrangement for an installation (10) according to Claim 1 for operating at least one electrical load (12, 12') in a building-related arrangement, the circuit arrangement comprising
a) a switching element (30),
b) a communication module (26) which is designed to receive switching commands and/or to relay switching states,
c) a controller, in particular a microcontroller (28), which controls the switching element (30) and is connected to the communication module (26), and
d) at least one wiring connection for at least one load (12, 12').

## Revendications

1. Installation (10) pour l'actionnement d'au moins une charge électrique (12, 12') d'un système technique de domotique ou de bâtiment, comprenant au moins
a) une source d'alimentation (16),
b) une charge électrique (12, 12'),
c) un circuit (12/12', 14/14'/14'', 16),
d) une boîte de jonction prête à l'emploi et compacte (24) dans ou au lieu d'une boîte de dérivation ou encastrable utilisée dans des installations classiques,
e) un élément de commande (14, 14', 14") et
f) une unité de commande d'automatisation de domotique ou de bâtiment (32) mettant en oeuvre la fonction d'une centrale de commande,
dans laquelle
g) la boîte de jonction (24) comprend chaque au moins un élément de commutation (30), un module de communication bidirectionnel (26) effectuant à la fois la réception d'ordres de commutation et/ou la retransmission d'états de commutation, un microcontrôleur (28) ainsi que des raccordements par câble destinés à une ou plusieurs charges (12, 12'),
h) la boîte de jonction (24) est raccordée par l'intermédiaire de conducteurs électriques existants (18, 20) au réseau (16), et
i) un ou plusieurs éléments de commande (14, 14', 14") communiquent avec la boite de jonction (24).

2. Installation (10) selon la revendication 1, **caractérisée en ce que** le module de communication bidirectionnel (26) est conçu à base de transmission radio, à base de transmission infrarouge et/ou de manière connectée par des conducteurs.

3. Installation (10) selon l'une quelconque des revendications 1 à 2, **caractérisée en ce que** l'élément de commutation (30) présente au moins un relais et/ou une unité de commande de gradateur (40), de préférence réalisée sous la forme d'une sortie de tension proportionnelle ou d'une commande de déphasage, et/ou comprend un élément commandant proportionnellement la puissance électrique.

4. Installation (10) selon l'une quelconque des revendications 1 à 3, **caractérisée en ce que** l'élément de commande (14, 14', 14") est sans courant.

5. Procédé de commande de l'installation (10) selon l'une quelconque des revendications 1 à 4, **caractérisé en ce qu'**un ordre de commutation envoyé à une charge électrique (12, 12') déclenche un processus de commutation par l'intermédiaire de conducteurs électriques existants de l'installation (18, 20) et **en ce que** le module de communication bidirectionnel (26) signale le nouvel état de commutation à l'unité de commande d'automatisation de domotique ou de bâtiment (32) pour la comparaison de données.

6. Procédé selon la revendication 5, **caractérisé en ce que** l'unité de commande d'automatisation de domotique ou de bâtiment (32) déclenche un ordre de commutation et annonce un nouvel état de commutation avec ou sans rétroaction du module de communication bidirectionnel (26).

7. Procédé selon la revendication 5 ou 6, **caractérisé en ce qu'**une fonction de gradation est effectuée par l'intermédiaire d'une unité de commande de gradateur (40), de préférence une sortie de tension proportionnelle, une commande de déphasage et/ou par l'intermédiaire d'un élément commandant proportionnellement une puissance électrique.

8. Procédé selon l'une quelconque des revendications 5 à 7, **caractérisé en ce que** la communication entre des éléments de commande (14, 14', 14") et la boite de jonction (24) s'effectue de manière connectée par fil, ou sur la base de transmission radio et/ou de transmission infrarouge.

9. Procédé selon l'une quelconque des revendications 5 à 8, **caractérisé en ce que** la communication radio ou infrarouge s'effectue par l'intermédiaire de normes globales ou par l'intermédiaire de solutions propriétaires.

10. Boite de jonction (24) comprenant un dispositif de commutation destiné à une installation (10) selon la revendication 1 pour l'actionnement d'au moins une charge électrique (12, 12') dans un dispositif technique de bâtiment, dans laquelle le dispositif de commutation comprend
a) un élément de commutation (30),
b) un module de communication (26) qui est conçu pour recevoir des ordres de commutation et/ou retransmettre des états de commutation,
c) une unité de commande, en particulier un microcontrôleur (28), qui commande l'élément de commutation (30) et est reliée au module de communication (26), et
d) au moins un raccordement par fil destiné à au moins une charge (12, 12').
